# EUROPEAN PATENT APPLICATION

(11) **EP 1 039 214 A2**
(43) Date of publication of application: **27.09.2000**
(21) Application number: 00302393.4
(22) Date of filing: 23.03.2000
(51) Int. Cl.: F21S 8/10

(54) **An automobile lamp with light emitting diodes as light sources of a compact design**

(30) Priority: 24.03.1999 CZ 104199
(71) Applicant: Autopal, s.r.o., Novy Jicin 741 01 (CZ)
(72) Inventor: Vejbor, Petr, Olomouc 779 00 (CZ); Cejnek, Milan, Novy Jicin 741 01 (CZ); Kubena, Vladimir, Novy Jicin 741 01 (CZ); Navratil, Jiri, 174 Kunin 742 53 (CZ)
(74) Representative: Godwin, Edgar James

(57) **Abstract**

An automobile lamp with light emitting diodes as light sources of a compact design, consisting in that said light sources (1) are placed on the inner side of a lamp housing (6) of said lamp, and interconnected by electric circuit conductors (5), whereby, the optical axis (7) of said light sources (1) passes through a refractor (3) perpendicularly, and said refractor (3) is comprised of Fresnel lenses and refractive optics and is carried by a tube (2) or by a part of said tube (2), and said optical axis (7) passes through a colourless or optionally coloured cover lens (4), whereby, said electric circuit conductors (5) of the respective lamp are concentrated in at least one connector (8) forming simultaneously a housing for other optional electric circuit parts (9) necessary to operate said lamp.

## Description

### Field of the Invention

The present invention relates to an automobile lamp with light emitting diodes as light sources (further also LED light sources) of a compact design preferably for signal purposes.

### Background of the Invention

In their optical design, automobile signal lamps provided with LEDs as light sources use paraboloidal reflectors, Fresnel lenses and refractive optics on their lamp cover lens. Instead of a refractor a diffraction grating of a defined diffusion is sometimes used. Some lamps are built as a network of individual, electrically interconnected LED light sources on a reflective or matte surface protected by a lamp cover lens.

In such cases, a light intensity and a light distribution which meets the specific characteristics required of a respective signal lamp are reached by using an appropriate number of the LED light sources, by their geometric arrangement, eventually, by deflecting their optical axes.

The most advanced designs of such LED light sources are provided with pressed through contacts what makes possible to arrange them spatially on supporting metallic base but only on linear surfaces (planes, cylinders).

### Summary of the Invention

The present invention relates to an automobile lamp with light emitting diodes as light sources of a compact design which consists in filling the space under a lamp cover lens by Fresnel refraction optics, for example in the shape of a hexagon, and with a LED light source carrier which simultaneously forms a lamp body of said lamp. Tubes or their parts, simultaneously carrying Fresnel refractive elements, form an integral design assembly forming one signal lamp or a grouped integral signal lamp. Individual signal lamps of the grouped integral signal lamp have then their individual electrical interconnection of the their LED light sources, individual colour, and their specific number of LED light sources. Further, the so designed grouped integral lamps can have their individual specific diffusion characteristics of their respective refractive optics of their refractors.

It is possible to alter positions of said LED light sources with regard to all three space dimensions. Therefore, it is possible to design a signal automobile lamp behind a lamp cover lens of any obliquity. Surfaces of individual optical a Fresnel refractor carrying assemblies can be colourless, coloured or opaque. The opaque surfaces of said individual optical assemblies are used in designs of the peripheral LED light sources of two adjacent grouped integral lamps. Alternatively, the Fresnel refractive optics can be made of coloured plastics.

A compact design of said automobile lamp with LED light sources utilises the advantages of the flat design of such lamp when the Fresnel refractors placed above said individual LED light sources are carried by a surface covered by said lamp cover lens, whereby, said LED light sources are mounted on a body which forms a lamp housing of said automobile lamp. Design position of said lamp housing explicit because said lamp housing position delimits the focal distance and the lateral position of every LED light source with regard to the Fresnel lenses of a refractor.

On the inner side of said lamp housing circuitry comprising conductors and contacts is arranged and individual LED light sources are fixed to them. Said contacts of the signal lamp(s) are led through said lamp housing into a connector provided on the external side of said lamp housing.

Optionally, a controlling switching system, e.g. to control a turn indicator, further, protecting diodes of the remaining lamps or diode voltage resistors, can also be mounted on said external side of said lamp housing.

A cover lens of said automobile lamp with LED light sources of a compact design can be colourless, smoked or of any other tint, whereby, the quasi-monochromatic nature of the LED light sources remains unchanged.

A cover lens can also be provided with decorative patterns.

### Brief Description of the Drawings

Figure 1 shows optical principle of an automobile lamp with LEDs as light sources of a compact design which comprises a carrier of a LED light source, a refractor and a cover lens of said lamp.

Figure 2 shows schematically an arrangement of individual parts of an automobile lamp with LED light sources of a compact design, whereby said parts are arranged along and follow the inner surface of a cover lens of said lamp.

Figure 3 shows in a perspective view a three dimensional arrangement of the hexagonal refractors provided with tubes of an automobile lamp with LED light sources of a compact design.

### Detailed Description of the Invention

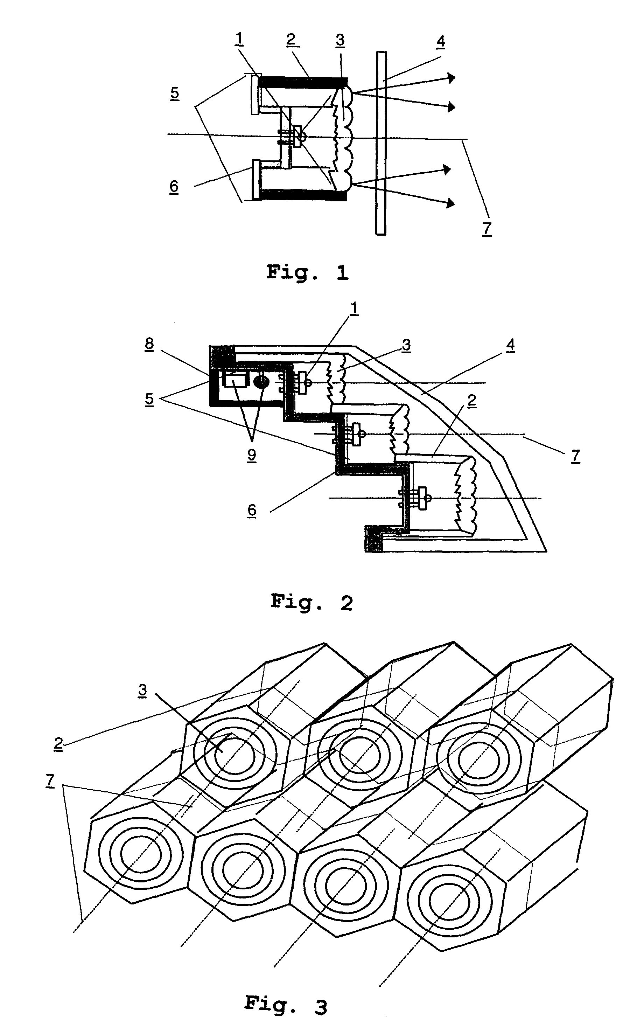

Fig. 2 shows such an assembly of an automobile lamp with LED light sources of a compact design where the LED light sources 1 are resting on the lamp housing 6 of said lamp and where the LED light sources 1 are interconnected by conductors 5. The optical axis 7 of a LED light source 1 intersects a refractor 3 which is carried by a tube 2 or by a part of said tube 2. Further, the optical axis 7 is directed to the cover lens 4 of said lamp.

Individual connectors 5 converge to one or more connectors 8, whereby said connectors 8 provide a housing for other optional electric circuit parts 9 provided they are necessary for operation of an automobile lamp with LED light sources of a compact design.

### Industrial Use

An automobile lamp with LED light sources of a compact design according to the present invention can find use in transportation means, e.g. in road traffic means.

## Claims

1. An automobile lamp with light emitting diodes as light sources (1) of a compact design, **characterised** in that said light sources (1) are
placed on the inner side of a lamp housing (6) of said lamp and interconnected by electric circuit conductors (5),
whereby, the optical axis (7) of said light sources (1) passes through a refractor (3) perpendicularly,
and said refractor (3) is comprised of Fresnel lenses and refractive elements which refractor (3) is carried by a tube (2) or by a part of said tube (2), and
said optical axis (7) passes through a cover lens (4),
whereby, said electric circuit conductors (5) of the respective lamp are concentrated in at least one connector (8) forming simultaneously a housing for other optional electric circuit parts (9) necessary to operate said lamp.

2. An automobile lamp of Claim 1 , **characterised** in that individual grouped integral signal lamps of a grouped design of said automobile lamp differ in their electric interconnections of their respective light sources (1), their electric circuitry of their conductors (5) and their connectors (8), their colour and the number of their light sources (1) and the diffusion intensity of the pillow optics of their refractors (3).

3. An automobile lamp of Claim 1 , **characterised** in that choice of said light sources (1) position and of said refractor (3) position with regard to three spatial dimensions provides for assembly behind said cover lens (4) of any obliquity, when walls of the adjacent tubes (2) of the adjacent grouped lamps can be opaque.

4. An automobile lamp of anyone of Claims 1 to 3, **characterised** in that the refractors (3) under said cover lens (4) that can cope the cover lens (4) form are situated above the individual light sources (1) at the focal distance on said optical axis (7) and the surface carrying said light sources (1) forms said lamp housing (6) of said lamp, whereby the position of said lamp housing (6) is explicit with regard to design, lasting and undisassemblable.

5. An automobile lamp of anyone of Claims 1 to 4, **characterised** in that a circuitry of conductors (5) with contacts is situated on the inner side of said lamp housing (6), whereby said individual light sources (1) are fixed to said contacts and said conductors (5) are led to the external side of said lamp housing (6) at least at one place in the form of a connector (8), whereby said connector (8) optionally forms a cover of a controlling switching system, preferably of a directional lamp, and of a protecting diode of the remaining lamps and of their voltage resistors (9).

6. An automobile lamp of anyone of Claims 1 to 5, **characterised** in that said cover lens (4) is optionally colourless, smoked or of other tint and that a surface of said cover lens (4) is optionally provided with decorative patterns.
